# EUROPÄISCHE PATENTSCHRIFT

(11) **EP 0 798 102 B1**
(45) Veröffentlichungstag und Bekanntmachung des Hinweises auf die Patenterteilung: **20.11.2002**
(21) Anmeldenummer: 97104539.8
(22) Anmeldetag: 17.03.1997
(51) Int. Cl.: B29C 70/08, B32B 5/12, C08J 5/24, C08J 5/10

(54) **Sandwichstruktur mit einem selbstklebenden Prepreg**
Sandwich structure wth a self-sticking prepreg
Structure sandwich avec un produit pré-impregné auto-adhésif

(30) Priorität: 27.03.1996 DE 19612211
(43) Veröffentlichungstag der Anmeldung: 01.10.1997
(73) Patentinhaber: Stesalit AG, 4234 Zullwil (CH)
(72) Erfinder: Gabrisch, Hans-Joachim, 52393 Hürtgenwald (DE); de Zwart, Marteen, Dr., 4814 Bottenwil (CH); Rudin, Markus, 4418 Reigoldswil (CH)
(74) Vertreter: Wenger, René

(56) Entgegenhaltungen:
- US-A- 5 112 924
- PATENT ABSTRACTS OF JAPAN vol. 017, no. 382 (C-1085), 19. Juli 1993 & JP 05 065357 A (SEKISUI CHEM CO LTD), 19. März 1993
- PATENT ABSTRACTS OF JAPAN vol. 015, no. 484 (C-0892), 9. Dezember 1991 & JP 03 210356 A (KANEBO LTD), 13. September 1991

## Beschreibung

Die vorliegende Erfindung betrifft eine Sandwichstruktur nach dem Oberbegriff des Anspruches 1.

Für die Herstellung von Primärstrukturen, die beispielsweise in der Luftfahrt eingesetzt werden, beispielsweise von Rumpf, Zelle, Flügel, Leitwerke, Rotoren etc. finden heutzutage mehr und mehr Sandwichkonstruktionen auf der Basis von Honigwaben-Kernmaterialien - (Nomex®-Honeycomb) und/oder Schaumstoff-Kernmaterialien und faserverstärkten Decklagen Anwendung. Die mechanischen Eigenschaften solcher Sandwichkonstruktionen hängen sehr stark von der Bindung der Decklagen an das Kernmaterial ab. Bei der Herstellung von leichten und hochsteifen Primärstrukturen dieser Art wird vornehmlich ein mit Kohlenstoffasern (Carbonfasern) verstärktes Material eingesetzt, da sich hiermit hohe Festigkeiten und Steifigkeiten bei gleichzeitig niedrigem Gewicht erreichen lassen.

Eine für solche Anwendungszwecke ausreichend hohe Klebkraft der Decklagen an dem Kernmaterial ist dann gegeben, wenn beim Anschältest die Haftung zwischen dem Kernmaterial und der faserverstärkten Decklage so stark ist, daß das Kernmaterial in sich reißt und der Verbund Kernmaterial/Decklage erhalten bleibt. Heutzutage werden für solche Zwecke selbstklebende Prepregs, das heißt mit einer Harzmatrix vorimprägnierte Fasergebilde eingesetzt, die Harzgehalte um 50 Gew.%, bezogen auf das Gewicht des Prepregs, aufweisen. Bei gleichem Harzgehalt in Gewichtsprozent ergibt sich bei einem Trägermaterial auf der Grundlage von Glasfasern ein volumenmäßig höherer Harzgehalt als bei einem Trägermaterial auf der Grundlage von Kohlenstoffasern, da die Kohlenstoffasern bei gleicher Masse ein deutlich höheres Volumen besitzen. Dies beeinträchtigt die Selbstklebeeingenschaften von Gebilden auf der Grundlage von Kohlenstoffasern.

Als Matrixmaterialien, die die oben angesprochenen Selbstklebeeigenschaften ermöglichen, werden heute üblicherweise zähmodifizierte Epoxidharze (toughened epoxy) angewandt. Allerdings sind die Harzsysteme, die für den Einsatz in Primärstrukturen für die Luftfahrt in Frage kommen, also die bei 180°C härtenden Systeme, und die auch bei erhöhten Temperaturen nach Feuchtesättigung noch die erforderlichen mechanischen Eigenschaften aufweisen, auf Grund der notwendigen hohen Vernetzungsdichte und der damit verbundenen hohen Sprödigkeit nicht mehr als selbstklebend einzustufen. Daher müssen solche Prepregs nach dem Stand der Technik mittels sogenannter Klebefilme, die direkt auf das Kernmaterial aufgelegt werden, zu Sandwichkonstruktionen verarbeitet werden, um eine ausreichende Haftung der Decklagen zu gewährleisten. Diese Klebefilme besitzen jedoch den Nachteil, daß sie sehr schlechte mechanische Eigenschaften nach Feuchtsättigung und bei erhöhten Temperaturen ("hot wet"-Eigenschaften) aufweisen und darüber hinaus das Gewicht der Sandwichkonstruktion erhöhen, ohne jedoch selbst merklich zu einem Gewinn an Steifigkeit zu beitragen. Darüber hinaus sind solche Klebefilme kostspielig.

Die Aufgabe der vorliegenden Erfindung besteht somit darin, eine Sandwichstruktur herzustellen, welche sehr gute mechanische Eigenschaften nach Feuchtsättigung auch bei erhöhterTemperatur (135°C) aufweist und bei Anwendung von Kunststoffasern, Glasfasern, Kohlenstoffasern, Aramidfasern und/oder Gemischen oder Hybriden daraus auch bei niedrigen Harzgehalten ohne die Verwendung eines Klebefilmes Selbstklebeeigenschaften aufweist.

Diese Aufgabe wird nun gelöst durch das selbstklebende Prepreg nach Anspruch 1 in Verbindung mit den weiteren Merkmalen des Anspruches 1. Die Unteransprüche betreffen bevorzugte Ausführungsformen dieses Prepregs sowie dessen Verwendung für die Herstellung von Sandwichstrukturen mit Honigwaben- und/oder Schaumstoff-Kernmaterialien.

Gegenstand der Erfindung ist somit eine Sandwichstruktur nach Anspruch 1.

Das erfindungsgemäße Prepreg nach Anspruch 1 trägt auf einem Kernbereich mindestens einen Oberflächenbereich mit einem höheren Verhältnis von Harz zu Trägermaterial, wobei dieses Verhältnis auf das Gewicht bezogen ist. Somit besitzt der Kernbereich in der Mitte des Prepregs ein kleineres Harz/Faserträgermaterial-Gewichtsverhältnis als mindestens einer der darauf angeordneten Oberflächenbereiche im Bereich der Außenseiten des Prepregs. Natürlich kann das erfindungsgemäße Prepreg nach Anspruch 1 dann, wenn es als Mittellage zwischen zwei Honigwaben-Kernmaterialstrukturen eingebettet wird, auf beiden Oberflächen eine solche harzreichere Schicht aufweisen.

Das erfindungsgemäße Prepreg nach Anspruch 1 umfaßt somit ein harzimprägniertes Faserträgermaterial, das auf mindestens einer Oberfläche eine Schicht aus einem harzimprägnierten leichtgewichtigen Hilfsfasermaterial zur Bildung einer harzreichen Schicht aufweist, welches einen höheren Harzanteil aufnehmen kann, als es das für die Kernlage(n) verwendete Faserträgermaterial kann.

Demzufolge besitzt das leichtgewichtige Hilfsfasermaterial ein geringeres Flächengewicht als das Faserträgermaterial der Kernschicht des Prepregs, beispielsweise ein Flächengewicht von 15 bis 200 g/m², vorzugsweise von 20 bis 50 g/m². Demgegenüber besitzt das Faserträgermaterial ein Flächengewicht von 20 bis 1200 g/m², vorzugsweise von 50 bis 600 g/m² und noch bevorzugter von 60 bis 300 g/m². Insbesondere werden Kohlenstoffasergewebe mit Flächengewichten von 80 bis 700 g/m², vorzugsweise von 90 bis 285 g/m², Glasgewebe mit Flächengewichten von 20 bis 1200 g/m², vorzugsweise von 50 bis 600 g/m², oder Aramidgewebe mit Flächengewichten von 35 bis 770 g/m², vorzugsweise von 60 bis 230 g/m2 eingesetzt.

Gemäß einer bevorzugten Ausführungsform der Erfindung besteht das leichtgewichtige Hilfsfasermaterial aus gebundenen Kurzfasern, vorzugsweise einem Vlies, und/ oder aus weitmaschig verbundenen Endlosfasern, vorzugsweise einem Tüll oder einem anderen textilen Gewirk oder Geflecht aus Kunststoffasern, Glasfasern, Kohlenstoffasern, Aramidfasern und/oder Gemischen oder Hybriden daraus, das bzw. der auf der Oberfläche des eigentlichen Faserträgermaterials aufgebracht ist, welch letzteres in Form eines Gewebes, eines Multiaxialgewebes, eines unidirektionalen Bandes eines Fadengeleges und/oder eines Gewirks vorliegt.

Als Materialien sowohl für das Faserträgermaterial als auch für das leichtgewichtige Hilfsfasermaterial können übliche Fasermaterialien eingesetzt werden, welche die erforderliche Festigkeit und Warmfesteigenschaften besitzen, beispielsweise Polyester, Glas, Kohlenstoff, Aramid und/ oder Gemische oder Hybride daraus . Die Fasern können einzeln oder auch in Form von Gemischen in beliebiger Oberflächenbindung eingesetzt werden.

Beispielsweise besitzen Glasgewebe bei einer Dicke von 195 µm ein Flächengewicht von 212 g/m², Kohlenstoffasergewebe bei einer Dicke von 245 µm ein Flächengewicht von 205 g/m², Glasfaservlies bei einer Dicke von 685 µm ein Flächengewicht von 122 g/m2 und Glasfasertüll bei einer Dicke von 565 µm ein Flächengewicht von 249 g/m². Demzufolge besitzt das Hilfsfasermaterial eine geringere Dichte, d.h. bei gleicher Dicke eingeringeres Flächengewicht, beispielsweise eine Dichte im Bereich von 0,1 bis 0.55, vorzugsweise von 0,15 bis 0,50 g/cm³, während das Faserträgermaterial der Kernschicht des erfindungsgemäßen Prepregs nach Anspruch 1 eine Dichte im Bereich von 0,6 bis 1,4, vorzugsweise von 0.15 bis 0.50 g/cm3 besitzt.

Wesentlich ist lediglich, daß das erfindungsgemäße Prepreg nach Anspruch 1 an der Oberfläche, die mit dem Kernmaterial der Sandwichstruktur verbunden werden soll, einen höheren Harzanteil aufweist als in dem übrigen Bereich des Prepregs. Gemäß einer bevorzugten Ausführungsform der Erfindung steigt somit der Harzanteil des Prepregs von der Mitte des Materials zumindestens einer Oberfläche hin an, wobei dieser Anstieg kontinuierlich oder diskontinuierlich (stufenförmig) sein kann.

Vorzugsweise besitzt das imprägnierte Faserträgermaterial einen Harzgehalt von 10 bis 50 Gew.-%, noch bevorzugter von 20 bis 50 Gew.-% und entsprechend einen Faseranteil von 90 bis 50 Gew.-%, vorzugsweise von 80 bis 50 Gew.-%, während das imprägnierte Hilfsfasermaterial einen Harzgehalt von 50 bis 90 Gew.-%, vorzugsweise von 50 bis 80 Gew.-% und entsprechend einen Faseranteil von 10 bis 50 Gew.-%, vorzugsweise von 20 bis 50 Gew.-% aufweist.

Vorzugsweise verteilt sich der Harzanteil so, daß er etwa 30 Gew.-% im Faserträgermaterial und entsprechend etwa 70 Gew.-% im Hilfsfasermaterial beträgt. Während somit nach der vorliegenden Lehre das Gewichtsverhältnis von Harz zu Fasern im Kern des Prepregs geringer ist als auf den Oberflächen, enthalten herkömmliche Prepregs dieser Art das Harz in homogener Verteilung.

Die Herstellung des erfindungsgemäßen Prepregs nach Anspruch 1 erfolgt in der Weise, daß auf der Oberfläche des Faserträgermaterials ein leichtgewichtiges Hilfsfasermaterial, beispielsweise in Form eines Vlieses und/oder Tülls aufgebracht wird und das in dieser Weise erhaltene Fasergefüge mit dem Matrixharz imprägniert und getrocknet wird. Vorzugsweise wird das imprägnierende Harz bis zur B-Stufe vorgehärtet und kann dann bei der Herstellung der eigentlichen Sandwichkonstruktion unter Einwirkung von Wärme und Druck endgültig und vollständig ausgehärtet werden.

Bei dem erfindungsgemäßen Prepreg sind die Fasermaterialien des Trägermaterials und des leichtgewichtigen Hilfsfasermaterials mit einem oder mehreren hochvernetzenden Duromeren imprägniert, das heißt hitzehärtbaren Harzen, welche neben dem eigentlichen härtbaren Harz übliche Bestandteile, wie Härter, Härtungsbeschleuniger, Flammschutzmittel, die mechanischen Eigenschaften modifizierende Mittel etc. enthalten können.

Durch den erfindungsgemäßen Aufbau mit der harzreichen Oberflächenschicht ergibt das erfindungsgemäße Prepreg nach Anspruch 1 auch bei Gesamt-Harzgehalten unterhalb 50 Gew.%, beispielsweise von 40 bis 50 Gew.% oder auch darunter die erforderlichen Selbstklebe- und Haftungs-Eigenschaften, so daß es auch bei der Verwendung von Kohlenstoffasern in dem Fasermaterial des Prepregs und gegebenenfalls auch des Kernmaterials ohne die Anwendung von Klebefilmen gelingt, qualitativ hochwertige Sachwichkonstruktionen zu erzeugen.

Vorzugsweise sind die Trägermaterialien des erfindungsgemäßen Prepregs mit einem oder mehreren hochvernetzenden Duromeren imprägniert, das nach der Aushärtung eine Glasübergangstemperatur (Tg) von mehr als 180°C, vorzugsweise von mehr als 200°C, und eine Glasübergangstemperatur nach Feuchtsättigung von mehr als 135°C aufweist.

Gemäß einer vorteilhaften Ausführungsform der vorliegenden Lehre weist das erfindungsgemäße Prepreg nach Anspruch 1 einen Gehalt an hochvernetzenden Duromeren von 20 bis 60 Gew.-%, vorzugsweise von 40 bis 50 Gew.-%, noch bevorzugter von 35 bis 45 Gew.-% auf.

Mit Vorteil umfaßt das erfindungsgemäße Prepreg nach Anspruch 1 als Duromer ein Phenolharz, ein Epoxidharz, ein Bismaleinimidharz, ein Triazinharz und/oder ein Cyanatesterharz. Gemäß einer bevorzugten Ausführungsform der Erfindung enthält das hochvernetzende Duromere ein zähmodifiziertes Harz, beispielsweise ein mit einem Kautschuk modifiziertes Epoxidharz, um in dieser Weise weiter verbesserte Haftungseigenschaften zu erzielen.

Die Menge des Epoxidharzes, die dem Basis-Duromer zudosiert werden kann, hängt primär von der Ausgangs-Glasübergangstemperatur des Basisharzes ab. Je höher diese liegt, umso mehr Epoxidharz kann in der Regel zugemischt werden. Erfindungsgemäß werden jedoch ausreichende Selbstklebeeigenschaften durch die harzreiche Oberflächenschicht erzielt.

Während sich deutliche Unterschiede in den mechanischen Eigenschaften und den Eigenschaften nach Feuchtsättigung ergeben, wenn Laminate alternierend aus warm-feucht-tauglichen Systemen mit Klebefilmschichten aufgebaut sind, zeigen die aus dem erfindungsgemäßen Prepreg und reinen Kohlenstoffaser-Gewebelagen aufgebauten Laminate unverändert gute mechanische Eigenschaften.

Die aus dem erfindungsgemäßen Prepreg nach Anspruch 1 und Honigwaben-Kernmaterialien hergestellten Sandwichkonstruktionen - bei deren Aufbau die harzreiche Oberflächenschicht des erfindungsgemäßen Prepregs dem Honigwaben-Kernmaterial zugewandt wird - zeigen beim Schälversuch das angestrebte Verhalten, daß nämlich das Honigwaben-Kernmaterial in sich reißt und der Verbund Decklage/Kernmaterial erhalten bleibt.

Das erfindungsgemäße Prepreg nach Anspruch 1 ermöglicht somit sehr gute Warmfeuchtund Selbstklebe-Eigenschaften bei der Herstellung von Sandwichkonstruktionen und andererseits gute Hafteigenschaften, so daß qualitativ hochwertige Sandwichkonstruktionen für die Luftfahrt hergestellt werden können.

Das folgende Beispiel dient der weiteren Erläuterung der Erfindung.

### Beispiel

Als Faserträgermaterial wird ein Kohlenstoffasergewebe mit einem Flächengewicht von 225 g/m² eingesetzt, welches einseitig mit einer Glasvliesauflage mit einem Flächengewicht von 34 g/m² versehen ist.

Dieses Fasermaterial wird mit der nachfolgend angegebenen Komponentenmischung imprägniert:

| | **Komponente** | **Menge bezogen auf Feststoffanteil** **(Gew.-%)** |
|---|---|---|
| | | |
| **1** | Hochvernetzendes, duromeres Reaktionsharz | 51,0 |
| **2** | niedermolekulares Epoxidharz | 11,0 |
| **3** | zähmodifiziertes Epoxidharz | 31,0 |
| **4** | hochviskoses Phenoxyharz | 4,3 |
| **5** | Dicyandiamid | 2,5 |
| **6** | Beschleuniger | 0,2 |

Die Imprägnierung erfolgt mit einer Auftragsmenge von 210 g/m² in klassischer Weise mit Hilfe einer Vertikalbeschichtungsvorrichtung unter Entfernung des Lösungsmittels (Methylethylketon) und unter Überführung der Matrix in den B-Zustand. Es resultiert ein Prepregflächengewicht von 470 g/m², was einem Gesamt-Harzgehalt von 45 Gew.-% entspricht.

Unter Verwendung des in dieser Weise erhaltenen Prepregs und eines Waben-Kernmaterials (Nomex®) mit einer Zellweite von 3,2 mm, einem Raumgewicht von 48 kg/m³ und einer Dicke von 9 mm wird ein Sandwichaufbau hergestellt. Es werden je zwei Decklagen des Prepregs aufgebracht, wobei die erste Lage 0°/90° und die zweite Lage ± 45° verlegt werden. Das Verpressen erfolgt während zwei Stunden bei 3,5 bar und 180°C.

Eigenschaften des Sandwichaufbaus:
Sollwert für den Wabenbruch beim Schälversuch: > 35 Nmm/mm
Istwert beim Schälversuch: 37 Nmm/mm unter Wabenbruch.
Ein zu Vergleichszwecken ohne das Hilfsfasermaterial hergestellter Sandwichaufbau erreicht bei identischer Harzrezeptur und gleichem Harzgehalt einen Istwert beim Schälversuch von lediglich 25 Nmm/mm, wobei sich die Decklagen vom Wabenkern lösen ohne daß dieser bricht.

In den übrigen mechanischen Eigenschaften, wie Biegefestigkeit, interlaminare Schälfestigkeit, Druckfestigkeit und Zugfestigkeit (gemessen an Vollaminaten) sind die mit dem erfindungsgemäßen Prepreg hergestellten Verbundkörper den herkömmlich hergestellten gleichwertig.

## Patentansprüche

1. Sandwichstruktur mit Honigwaben- und/oder Schaumstoff-Kernmaterial und Deckschichten, wobei das Kernmaterial mit den Deckschichten durch ein ausgehärtetes selbstklebendes Prepreg auf der Grundlage eines harzimprägnierten Faserträgermaterials verbunden ist, **dadurch gekennzeichnet, daß** das Prepreg aus einer Kernschicht aus Faserträgermaterial und Oberflächenschichten bildendem Hilfsfasermaterial besteht, wobei das Faserträgermaterial der Kernschicht ein höheres Flächengewicht als das Hilfsfasermaterial besitzt und daß das Gewichtsverhältnis von Harz zu Fasermaterial in den Oberflächenschichten höher als in der Kernschicht ist, und daß der Fasermaterialaufbau aus Faserträger- und Hilfsfasermaterial mit einem hitzehärtbaren Harz imprägniert und das Harz in den B-Zustand überführt wurde.

2. Sandwichstruktur nach Anspruch 1 oder 2, **dadurch gekennzeichnet, daß** die Fasern des Faserträgermaterials und/oder des Hilfsfasermaterials Kunststoffasern, Glasfasern, Kohlenstoffasern, Aramidfasern und/oder Gemische oder Hybride daraus sind.

3. Sandwichstruktur nach Anspruch 1, **dadurch gekennzeichnet, daß** daß das Faserträgermaterial ein Flächengewicht von 20 bis 1200 g/m², vorzugsweise von 50 bis 600 g/m² und noch bevorzugter von 60 bis 300 g/m² aufweist.

4. Sandwichstruktur nach Anspruch 1, **dadurch gekennzeichnet, daß** das Faserträgermaterial in Form eines Gewebes, eines Multiaxlalgewebes, eines unidirektionalen Bandes und/oder eines Gewirks vorliegt.

5. Sandwichstruktur nach den Ansprüchen 1 bis 4 , **dadurch gekennzeichnet, daß** das leichtgewichtige Hilfsfasermaterial ein Flächengewicht von 15 bis 200 g/m², vorzugsweise von 20 bis 50 g/m² aufweist.

6. Sandwichstruktur nach mindestens einem der vorhergehenden Ansprüche, **dadurch gekennzeichnet, daß** das leichtgewichtige Hilfsfasermaterial aus gebundenen Kurzfasern, vorzugsweise einem Vlies, und/ oder aus weitmaschig verbundenen Endlosfasern, vorzugsweise einem Tüll oder einem anderen textilen Gewirk oder Geflecht aus Kunststoffasern, Glasfasern, Kohlenstoffasern, Aramidfasern und/oder Gemischen oder Hybriden daraus besteht.

7. Sandwichstruktur nach mindestens einem der vorhergehenden Ansprüche, **dadurch gekennzeichnet, daß** das imprägnierte Faserträgermaterial einen Harzgehalt von 10 bis 50 Gew.-%, vorzugsweise von 20 bis 50 Gew.-% und das imprägnierte Hilfsfasermaterial entsprechend einen Harzgehalt von 50 bis 90 Gew.-%, vorzugsweise von 50 bis 80 Gew.-% aufweisen.

8. Sandwichstruktur nach mindestens einem der vorhergehenden Ansprüche, **dadurch gekennzeichnet, daß** die Trägermaterialien mit einem oder mehreren hochvernetzenden Duromeren imprägniert sind, das nach der Aushärtung eine Glasübergangstemperatur (Tg) von mehr als 180°C, vorzugsweise von mehr als 200°C, und eine Glasübergangstemperatur nach Feuchtsättigung von mehr als 135°C aufweist.

9. Sandwichstruktur nach Anspruch 8, **dadurch gekennzeichnet, daß** das Prepreg einen Gehalt an hochvernetzenden Duromeren von 20 bis 60 Gew.-% , vorzugsweise von 40 bis 50 Gew.-% aufweist.

10. Sandwichstruktur nach den Ansprüchen 8 und 9, **dadurch gekennzeichnet, daß** das Prepreg als Duromer ein Phenolharz, ein Epoxidharz, ein Bismaleinimidharz, ein Triazinharz und/oder ein Cyanatesterharz enthält.

11. Sandwichstruktur nach den Ansprüchen 8 bis 10, **dadurch gekennzeichnet, daß** das hochvernetzende Duromer ein zähmodifiziertes Harz enthält.

12. Sandwichstruktur nach Anspruch 11, **dadurch gekennzeichnet, daß** das zähmodifizierte Harz ein mit einem Kautschuk modifiziertes Epoxidharz ist.

## Claims

1. Sandwich structure with honeycomb and/or foamed core material and outer layers, wherein the core material is connected to the outer layers by means of a cured self-adhesive prepreg on the basis of a resin-impregnated fibre carrier material,
**characterised in that**
the prepreg comprises a core layer of fibre carrier material and auxiliary fibre material that forms surface layers, wherein the fibre carrier material of the core layer has a higher weight per unit area than the auxiliary fibre material, and that the weight ratio of resin to fibre material in the surface layers is higher than in the core layer, and that the fibre material structure of fibre carrier material and auxiliary fibre material has been impregnated with a heat-curable resin and the resin has been converted in the B-stage.

2. Sandwich structure in accordance with claim 1 or 2 [*sic*],
**characterised in that** the fibres of the fibre carrier material and/or the auxiliary fibre material are synthetic fibres, glass fibres, carbon fibres, aramide fibres and/or blends or hybrids thereof.

3. Sandwich structure in accordance with claim 1,
**characterised in that** the fibre carrier material has a weight per unit area of 20 to 1200 g/m², preferably of 50 to 600 g/m², and even more preferably of 60 to 300 g/m².

4. Sandwich structure in accordance with claim 1,
**characterised in that** the fibre carrier material is present in the form of a woven textile, a multi-axial woven textile, a unidirectional band and/or a knit fabric.

5. Sandwich structure in accordance with claims 1 to 4,
**characterised in that** the lightweight auxiliary fibre material has a weight per unit area of 15 to 200 g/m², preferably of 20 to 50 g/m².

6. Sandwich structure in accordance with at least one of the preceding claims,
**characterised in that** the lightweight auxiliary fibre material comprises bound short fibres, preferably a non-woven fabric, and / or continuous fibres bound in a wide-meshed manner, preferably a tulle or other textile knit fabric or braid of synthetic fibres, glass fibres, carbon fibres, aramide fibres and/or blends or hybrids thereof.

7. Sandwich structure in accordance with at least one of the preceding claims,
**characterised in that** the impregnated fibre carrier material has a resin content of 10 to 50 % by weight, preferably 20 to 50 % by weight, and that the impregnated auxiliary fibre material accordingly has a resin content of 50 to 90 % by weight, preferably 50 to 80 % by weight.

8. Sandwich structure in accordance with at least one of the preceding claims,
**characterised in that** the carrier materials are impregnated with one of more high cross-linking duromers, which after curing has a glass transition temperature (Tg) of more than 180°C, preferably more than 200°C, and a glass transition temperature after moist saturation of more than 135°C.

9. Sandwich structure in accordance with claim 8, **characterised in that** the prepreg has a content of high cross-linking duromers of 20 to 60 % by weight, preferably of 40 to 50 % by weight.

10. Sandwich structure in accordance with claims 8 and 9, **characterised in that** the prepreg contains, as a duromer, a phenol resin, an epoxy resin, a bismaleinimid resin, a triazine resin and / or a cyanate ester resin.

11. Sandwich structure in accordance with claims 8 to 10, **characterised in that** the high cross-linking duromer contains a tough-modified resin.

12. Sandwich structure in accordance with claim 11, **characterised in that** the tough-modified resin is an epoxy resin modified with a caoutchouc.

## Revendications

1. Structure sandwich comprenant un matériau d'âme en nid d'abeilles et/ou alvéolaire et des couches extérieures, le matériau d'âme étant relié aux couches extérieures grâce à un pré-imprégné auto-adhésif durci à base de matériau de support fibreux imprégné de résine, **caractérisée en ce que** le pré-imprégné se compose d'une couche centrale formée d'un matériau de support fibreux et d'un matériau fibreux auxiliaire qui définit des couches superficielles, le matériau de support fibreux de la couche centrale ayant une masse par unité de surface supérieure au matériau fibreux auxiliaire, **en ce que** le rapport de poids de la résine sur le matériau fibreux est plus grand dans les couches superficielles par rapport à la couche centrale, et **en ce que** la structure de matériau fibreux formée du matériau de support fibreux et du matériau fibreux auxiliaire a été imprégnée d'une résine thermodurcissable et la résine est passée à l'état B.

2. Structure sandwich selon la revendication 1 ou 2, **caractérisée en ce que** les fibres du matériau de support fibreux et/ou du matériau fibreux auxiliaire sont des fibres de plastique, de verre, de carbone, d'aramide et/ou des mélanges ou des hybrides de celles-ci.

3. Structure sandwich selon la revendication 1, **caractérisée en ce que** le matériau de support fibreux a une masse par unité de surface de 20 à 1200 g/m², de préférence de 50 à 600 g/m², et plus spécialement de 60 à 300 g/m².

4. Structure sandwich selon la revendication 1, **caractérisée en ce que** le matériau de support fibreux se présente sous la forme d'un tissu, d'un tissu multi-axial, d'une bande unidirectionnelle et/ou d'un tissu à mailles.

5. Structure sandwich selon les revendications 1 à 4, **caractérisée en ce que** le matériau fibreux auxiliaire de faible poids a une masse par unité de surface de 15 à 200 g/m², de préférence de 20 à 50 g/m².

6. Structure sandwich selon l'une au moins des revendications précédentes, **caractérisée en ce que** le matériau fibreux auxiliaire de faible poids se compose de fibres courtes liées, de préférence un non-tissé, et/ou de filaments reliés à larges mailles, de préférence un tulle ou un autre tissu à mailles ou entrelacement textile de fibres de plastique, de verre, de carbone, d'aramide et/ou de mélanges ou d'hybrides de celles-ci.

7. Structure sandwich selon l'une au moins des revendications précédentes, **caractérisée en ce que** le matériau de support fibreux imprégné a une teneur en résine de 10 à 50 % en poids, de préférence de 20 à 50 % en poids, et le matériau fibreux auxiliaire imprégné a en conséquence une teneur en résine de 50 à 90 % en poids, de préférence de 50 à 80 % en poids.

8. Structure sandwich selon l'une au moins des revendications précédentes, **caractérisée en ce que** les matériaux de support sont imprégnés d'une ou plusieurs matières thermodurcissables à réticulation élevée qui présentent après durcissement une température de transition vitreuse (Tg) de plus de 180°C, de préférence de plus de 200°C, et une température de transition vitreuse après saturation d'humidité de plus de 135°C.

9. Structure sandwich selon la revendication 8, **caractérisée en ce que** le pré-imprégné a une teneur en matières thermodurcissables à réticulation élevée de 20 à 60 % en poids, de préférence de 40 à 50 % en poids.

10. Structure sandwich selon les revendications 8 et 9, **caractérisée en ce que** le pré-imprégné contient comme matière thermodurcissable une résine phénolique, une résine époxy, une résine de bismaléinimide, une résine de triazine et/ou une résine de cyanatester.

11. Structure sandwich selon les revendications 8 à 10, **caractérisée en ce que** la matière thermodurcissable à réticulation élevée contient une résine durcie.

12. Structure sandwich selon la revendication 11, **caractérisée en ce que** la résine durcie est une résine époxy modifiée à l'aide d'un caoutchouc.
